# EUROPÄISCHE PATENTSCHRIFT

(11) **EP 2 706 866 B1**
(45) Veröffentlichungstag und Bekanntmachung des Hinweises auf die Patenterteilung: **20.04.2016**
(21) Anmeldenummer: 12719674.9
(22) Anmeldetag: 03.05.2012
(51) Int. Cl.: A23G 3/20, A23G 3/26, A61K 9/28

(54) **DRAGIER-VORRICHTUNG**
COATING DEVICE
DISPOSITIF DE DRAGÉIFICATION

(30) Priorität: 09.05.2011 DE 102011075535
(43) Veröffentlichungstag der Anmeldung: 19.03.2014
(73) Patentinhaber: Lothar A. Wolf Spezialmaschinen GmbH, 32107 Bad Salzuflen (DE)
(72) Erfinder: WOLF, Michael Lothar, 32657 Lemgo (DE); KLEMPERT, Jörg, 32791 Lage (DE)
(74) Vertreter: Eisenführ Speiser
(86) Internationale Anmeldenummer: PCT/EP2012/058069
(87) Internationale Veröffentlichungsnummer: WO 2012/152636

(56) Entgegenhaltungen:
- AT-B- 288 843
- DE-A1- 2 139 154
- DE-A1- 2 323 853
- DE-A1- 19 630 954
- DE-C2- 2 759 288
- US-A- 2 308 420
- US-A- 3 915 120

## Beschreibung

Die Erfindung betrifft eine Dragier-Vorrichtung zum Beschichten von Lebensmitteln mit einem Beschichtungsmaterial, insbesondere mit Zuckerlösung, oder mit einer Lösung auf Basis von Zuckerersatzstoff mit einem Gehäuse, einer Beschichtungskammer innerhalb des Gehäuses, worin eine Abgabevorrichtung zum Abgeben des Beschichtungsmaterials platzierbar ist, und einem umlaufenden Band, das abschnittsweise einen Teil der Bewandung der Beschichtungskammer bildet und als Auflagefläche für die Lebensmittel vorgesehen ist.

Dragier-Vorrichtungen verschiedener Art werden in der Süßwarenindustrie zum Herstellen von Süßwarenprodukten mit einem Überzug verwendet, z. B. Schokoladen- oder Zuckerüberzug oder mit einem zuckerfreien Überzug. Solche zuckerfreien Überzüge enthalten beispielsweise den Zuckerersatzstoff Sorbitol oder Maltit.

Bekannt ist eine Dragier-Vorrichtung, bei der die zu dragierenden Lebensmittel, wie z. B. Nüsse, Rosinen oder Puffreis, auf einem umlaufenden Band aufliegen und durch das Band kontinuierlich durchgemischt werden, während oberhalb des Bandes eine Beschichtungsdüse den Überzug in flüssiger Form auf die Süßwaren aufsprüht. Der Überzug besteht mitunter aus mehreren dünnen Schichten, die nacheinander auf die Lebensmittel aufgetragen werden. Es sind unterschiedliche Beschichtungsmaterialien bekannt, beispielsweise Zuckerlösung oder Schokolade. Neue Schichten können jedoch erst dann aufgetragen werden, sobald die letzte Schicht des Beschichtungsmaterials erstarrt ist. Das heißt, dass beispielsweise eine Schicht eines Schokoladenüberzugs abgekühlt sein muss bzw. eine Schicht eines Zuckerüberzugs getrocknet sein muss.

Die Druckschriften US 2 308 420 A, AT 288 843 B und DE 21 39 154 A1 offenbaren derartige Vorrichtungen zum Beschichten von Lebensmittel.

Die Erstarrung (Abkühlung bzw. Trocknung) des Überzugs bestimmt dabei maßgeblich die Produktionsdauer. Bei Zuckerüberzügen konnte die Trocknungszeit der Zuckerlösung bisher durch Erhöhen des Zuckergehalts verringert werden. Dies hat jedoch den Nachteil, dass bei Zuckerlösungen mit höherem Zuckergehalt die Gefahr unbeabsichtigter Kristallisierung steigt. Im Extremfall kristallisiert die zuckerlösung bereits, obwohl die Temperatur noch nahe dem Siedepunkt ist. Darüber hinaus tritt erhöhter Verschleiß des Bandes und damit ein Anstieg des Wartungsaufwands auf. Hierin ist eine Begrenzung der Produktionseffizienz zu sehen.

Aufgabe der Erfindung ist es daher, eine Dragier-Vorrichtung mit einem umlaufenden Band aufzuzeigen, mittels derer eine Verbesserung der Produktionseffizienz erreicht werden kann.

Nach einem ersten Aspekt der Lösung wird die Aufgabe durch eine Dragier-Vorrichtung der eingangs genannten Art mit den Merkmalen des Anspruchs 1 gelöst, indem das Band eine Vielzahl von Gasdurchlässen aufweist, die zum beschleunigten Erstarren des Beschichtungsmaterials ausgebildet sind. Auf diese Weise ist ein besonders schnelles Erstarren des Beschichtungsmaterials im Vergleich zu einer Dragier-Vorrichtung möglich, die keine entsprechend dimensionierten Gasdurchlässe aufweist. Neue Schichten des Beschichtungsmaterials können in kürzeren Zeitintervallen hintereinander aufgetragen werden, so dass die letzte äußerste Schicht schneller erreicht und die Produktionszeit bzw. Beschichtungszeit der Lebensmittel verkürzt wird, ohne beispielsweise Zuckerlösungen mit derart hoher Zuckerkonzentration verwenden zu müssen, dass eine vorzeitige Kristallisation droht.

Die Gasdurchlässe ermöglichen das Abführen von Wärme und Feuchtigkeit aus der Beschichtungskammer und beschleunigen auf diese Weise die Erstarrung des Beschichtungsmaterials. Die Temperatur und der Feuchtigkeitsanteil im Gas innerhalb der Beschichtungskammer werden auf diese Weise effektiv gesenkt. Zudem entsteht an den Gasdurchlässen durch das nach außen tretende Gas eine Strömung, die die Kühlung und Trocknung des Beschichtungsmaterials begünstigt. Hierzu sind die Gasdurchlässe derart dimensioniert, dass im Betrieb der Vorrichtung stets ein zum beschleunigten Erstarren ausreichendes Volumen des Gases durch die Gasdurchlässe nach außen tritt. Der Austritt des Gases erfolgt aufgrund des Temperaturunterschiedes zwischen der Beschichtungskammer und der Luft außerhalb der Beschichtungskammer sowie aufgrund der Bewegung des Bandes. Die Gasdurchlässe sind vorzugsweise derart dimensioniert, dass auch kleinere Lebensmittel nicht durch die Gasdurchlässe durchfallen oder darin stecken bleiben.

Das umlaufende Band bildet abschnittsweise einen Teil der Bewandung der Beschichtungskammer. Es verläuft abschnittsweise innerhalb und abschnittsweise außerhalb der Beschichtungskammer. Die Beschichtungskammer ist durch die Gasdurchlässe des Bandes mit einem Volumen zur Aufnahme des Gases außerhalb der Beschichtungskammer strömungsverbunden, vorzugsweise mit der Umgebung. Das Band weist eine Auflagefläche für die zu beschichtenden Lebensmittel auf und ist so ausgebildet, dass die Lebensmittel durch die Bewegung des Bandes durchgemischt werden.

Bei den Lebensmitteln handelt es sich um Lebensmittel in der Größenordnung von mehreren Millimetern bis einigen Zentimetern. Diese sind insbesondere jegliche Art von Nüssen, Rosinen, Kaffeebohnen, Puffreis oder Tabletten.

Das Beschichtungsmaterial ist dazu eingerichtet an den Lebensmitteln zu haften und wird zum Auftragen auf die Lebensmittel zunächst verflüssigt, so dass es auf die Lebensmittel auftragbar, beispielsweise aufsprühbar, ist. Die Beschichtungsmaterialien können sowohl nur ein einziges Material, wie z.B. Schokolade, als auch mehrere Materialien in gelöster Form umfassen, wie z.B. Zuckerlösung.

Zuckerlösungen beinhalten unterschiedliche Arten von Zuckersorten, wie z. B. Glukose oder Raffinadezucker. Diese werden nach Auftragen auf die Lebensmittel durch Entziehen der Flüssigkeit erstarrt, d. h. getrocknet, und weisen einen bei Raumtemperatur physikalisch sowie chemisch beständigen Zustand auf. Aufgrund der Möglichkeit zum beschleunigten Erstarren des Beschichtungsmaterials mittels der Gasdurchlässe ist auch die Verwendung von Zuckerlösungen mit einem relativ geringen Zuckergehalt unter wirtschaftlich vertretbaren Bedingungen möglich

Vorteilhaft ist eine Ausführungsform der erfindungsgemäßen Vorrichtung, bei dem die Gasdurchlässe jeweils geradlinig ausgebildet sind. Diese Form der Gasdurchlässe ist besonders strömungsgünstig und ermöglicht den Austritt von höheren Gasvolumen durch die Gasdurchlässe. Die Gasdurchlässe weisen in länglicher Erstreckungsrichtung jeweils zwei geradlinige und parallel zueinander verlaufende Begrenzungen auf.

Die erfindungsgemäße Vorrichtung wird dadurch gekannzeichnet, dass sich die Gasdurchlässe in Richtung der Längsachse jeweils über die gesamte Breite der Beschichtungskammer erstrecken. Der Austritt des Gases erfolgt auf diese Weise über die gesamte Breite der Beschichtungskammer. Das Beschichtungsmaterial ist an jeder Stelle entlang der Breite der Beschichtungskammer beschleunigt erstarrbar. Die Gasdurchlässe erstrecken sich im Wesentlichen vollständig von einer Seitenwand zur anderen Seitenwand der Beschichtungskammer. Die Breite der Beschichtungskammer wird maximal ausgenutzt. Die Längsachse der Gasdurchlässe entspricht der Mittellinie entlang der länglichen Erstreckungsrichtung der jeweiligen Gasdurchlässe.

Vorzugsweise weist eine Ausführungsform der erfindungsgemäßen Vorrichtung Gasdurchlässe auf, die jeweils eine Breite im Bereich von 0,8 mm bis 3 mm aufweisen. Die Gasdurchlässe haben nach dieser Ausführungsform eine Größe, bei der das Band für eine Vielzahl von unterschiedlichen Lebensmitteln anwendbar ist und zugleich eine beschleunigte Erstarrung des Beschichtungsmaterials ermöglicht. Weiter bevorzugt liegt die Breite in einem Bereich von 1 mm bis 3mm. Besonders bevorzugt liegt die Breite in einem Bereich von 1 mm bis 2mm.

Die erfindungsgemäße Vorrichtung weist vorzugsweise Gasdurchlässe auf, deren Längsachsen jeweils quer zur Laufrichtung des Bandes ausgerichtet sind. Diese Ausführungsform ermöglicht eine gleichmäßige Verteilung der Lebensmittel auf dem Band in Richtung der Breite und ist zudem besonders einfach herstellbar.

Die erfindungsgemäße Vorrichtung wird durch eine vorteilhafte Ausführungsform weitergebildet, indem die Abstände zwischen zwei benachbarten Gasdurchlässen in Laufrichtung des Bandes konstant sind und vorzugsweise in einem Bereich von 10 mm bis 50 mm liegen. Die Auflagefläche eines Bandes nach diesen Abmessungen ist besonders vorteilhaft für eine gleichmäßige Durchmischung der Lebensmittel auf dem Band, ohne die beschleunigte Erstarrung des Beschichtungsmaterials einzuschränken. Vorzugsweise liegt der Abstand in einem Bereich von 20mm bis 40mm. Dieser Bereich bietet einen überraschend guten Kompromiss zwischen hoher Bandstabilität und Fertigungsökonomie einerseits und einer hohen Anzahl an Gasdurchlässen (hoher Gasdurchsatz) andererseits.

Eine weitere vorteilhafte Ausführungsform der erfindungsgemäßen Vorrichtung ist durch Kanten des Öffnungsquerschnitts weitergebildet, die abgerundet sind. Die Abrundung der Kanten führt zu einer Verringerung des Strömungswiderstands für das durch die Gasdurchlässe durchtretende Gas sowie insbesondere zu einer schonenden Behandlung der auf dem Band aufliegenden Lebensmittel. Der Rundungsradius liegt vorzugsweise in einem Bereich von 2mm bis 4mm.

Vorzugsweise weist das Band zwei Riemen auf, die jeweils entlang der Ränder des Bandes verlaufen und auf denen eine Vielzahl von zueinander beabstandeten Querstreben befestigt ist. Auf diese Weise ist ein besonders wartungsarmes Band besonders einfach herstellbar. Jeder Riemen ist bandförmig und in Laufrichtung des Bandes umlaufend ausgebildet. Die Riemen sind jeweils an den offenen Rändern bzw. Enden des Bandes in Querrichtung angeordnet. Auf den Riemen ist eine Vielzahl von Querstreben befestigt, die so zueinander beabstandet sind, dass sie berührungsfrei zueinander um das gesamte Band bewegbar sind. Die Querstreben weisen eine Auflagefläche für die Lebensmittel auf. Einzelne Querstreben sind vorzugsweise separat austauschbar, was die Herstellung und die Wartung des Bandes vereinfacht.

Die erfindungsgemäße Vorrichtung wird ferner dadurch vorteilhaft weitergebildet, dass die Riemen jeweils einstückig ausgebildet sind. Diese Ausführungsform ist besonders verschleißarm und wartungsarm betreibbar. Die einstückige Ausführung kommt ohne Gelenkverbindungen aus und umgeht eine Ablagerung des Beschichtungsmaterials innerhalb des Riemens, wie zum Beispiel Zucker. Ein Verschleiß des Riemens infolge Abrasion, wie er bei Gelenkverbindungen auftritt, wird so wirksam vermieden.

Ferner weist die Dragier-Vorrichtung Querstreben auf, die relativ zu einem korrespondierenden Befestigungsabschitt am Riemen starr befestigt sind. Die Querstreben sind relativ zu dem korrespondierenden Befestigungsabschnitt am Riemen bewegungsfrei befestigt, um ein Verschleiß aufgrund Relativbewegungen beider Teile zu verhindern. Des Weiteren ist der Zwischenraum zwischen einer Querstrebe und den Riemen im Bereich des Befestigungsabschnitts so ausgebildet, dass Ablagerungen des Beschichtungsmaterials in dem Zwischenraum weitestgehend verhinderbar sind. Ein abrasiver Verschleiß wird auf diese Weise wirksam verhindert.

Eine vorteilhafte Ausführungsform der erfindungsgemäßen Vorrichtung ist dadurch weitergebildet, dass jede Querstrebe ein Blechelement aufweist. Mittels dieser Ausführungsform ist die Herstellung eines haltbaren und stabilen Bandes mit einem geringen Materialaufwand und somit geringem Eigengewicht realisierbar. Die Blechelemente führen zudem zu geringerer Durchbiegung der Querstreben und zu geringen Betriebskosten. Alternativ ist bevorzugt, dass jede Querstrebe ein Kunststoffelement aufweist. Dies führt zu einer weiteren Reduktion des Eigengewichts, wenngleich hierbei Einschränkungen der Querstrebe hinsichtlich der Steifigkeit im Verhältnis zu der Materialstärke des Elements in Kauf zu nehmen sind.

Eine bevorzugte und vorteilhafte Ausführungsform der erfindungsgemäßen Vorrichtung ist gekennzeichnet durch eine Abgabevorrichtung zum Abgeben des Beschichtungsmaterials auf die Lebensmittel mit einer Abgabedüseneinrichtung und ein die Abgabedüseneinrichtung umschließendes Schutzrohr, wobei das Schutzrohr einen oder mehrere Auslässe aufweist, der fluchtend zur Abgabendüseneinrichtung zum Abgeben des Beschichtungsmaterials ausrichtbar ist. Die Abgabedüseneinrichtung ist, vorzugsweise vollständig, von dem Schutzrohr umschlossen und erreicht auf diese Weise einen effektiven Schutz der Abgabedüseneinrichtung vor Schmutz und sonstigen Kontaminationen. Zum Abgeben des Beschichtungsmaterials ist der Auslass bzw. sind die Auslässe des Schutzrohrs zur Abgabdüseneinrichtung ausrichtbar, drehbar oder verschiebbar. Der Auslass des Schutzrohrs ist zudem abschließbar, um die Abgabedüseneinrichtung vor äußeren Einflüssen außerhalb des Betriebs abzuschirmen.

Besonders vorteilhaft ist eine Ausführungsform der erfindungsgemäßen Vorrichtung, bei der die Abgabevorrichtung eine am Schutzrohr angebrachte Reinigungsdüseneinrichtung zum Reinigen der Abgabedüseneinrichtung aufweist, wobei die Abgabedüseneinrichtung zum Reinigen in eine Reinigungsposition drehbar ist. Auf diese Weise wird eine besonders einfache Wartung der Abgabevorrichtung mit kurzen Wartungszeiten erreicht. Zum Reinigen wird mittels der Reinigungsdüseneinrichtung ein Reinigungsmedium auf die Abgabedüseneinrichtung appliziert. Reinigungsmedien sind beispielsweise Wasser, Druckluft oder sonstige Reinigungsflüssigkeiten. Vorteilhafterweise ist die Abgabedüseneinrichtung in eine Reinigungsposition drehbar, so dass das Reinigungsmedium aufgrund der Schwerkraft von der Abgabedüseneinrichtung abtropft. Vorzugsweise befindet sich die Abgabedüseneinrichtung in der Reinigungsposition in einer horizontalen Ausrichtung. Des Weiteren ist bevorzugt, dass der oder die Auslässe des Schutzrohrs während der Reinigung der Abgabedüseneinrichtung geschlossen sind oder sich in einer Position befinden, um ein Austreten des Reinigungsmediums zu verhindern.

Nach einer weiteren vorteilhaften Ausführungsform der erfindungsgemäßen Vorrichtung weist der Auslass auf einer Innenseite des Schutzrohrs einen als Flüssigkeitsbarriere ausgebildeten Vorsprung auf. Der Vorsprung verhindert wirksam, dass kondensierte Flüssigkeit oder aus den Reinigungsdüseneinrichtung nachlaufende Flüssigkeit innerhalb des Schutzrohrs durch den Auslass in die Beschichtungskammer gelangt.

Nach einer weiteren vorteilhaften Ausführungsform der erfindungsgemäßen Vorrichtung ist das Schutzrohr in seiner länglichen Erstreckungsrichtung zumindest bereichsweise zu einer horizontalen Achse angewinkelt und ermöglicht auf diese Weise eine besonders einfache Entsorgung des Reinigungsmediums. Die Neigung ist so ausgelegt, dass das Reinigungsmedium zu einer Seite des Schutzmantels abfließt. Vorteilhafterweise ist das Schutzrohr mit einem Siphon bzw. Auffangbecken zum Aufnehmen des Reinigungsmediums verbunden.

Des Weiteren weist eine vorteilhafte Ausführungsform der erfindungsgemäßen Vorrichtung ein Band auf, das eine Vielzahl von Mitnehmern zum Aufgreifen der Gegenstände aufweist. Die Mitnehmer ermöglichen eine besonders gute Durchmischung der Lebensmittel auf dem Band und verbessern die Gleichmäßigkeit der Verteilung und Erstarrung des Beschichtungsmaterials. Vorzugsweise sind die Mitnehmer hakenförmig, stiftförmig, U-förmig, L-förmig, als Bleche oder Vorsprünge ausgebildet.

Eine weitere vorteilhafte Ausführungsform der erfindungsgemäßen Vorrichtung weist Querstreben auf, die mit einem haftungsmindernden, insbesondere lipophoben und/oder hydrophoben, Material beschichtet sind. Mittels dieser Ausführungsform sind Rückstände des Beschichtungsmaterials oder der Lebensmittel auf den Querstreben verringerbar. Die Reinigung des Bandes wird auf diese Weise vereinfacht. Die Beschichtung ist besonders bevorzugt auch oleophob. Vorzugsweise weist die Beschichtung eine mikroskopische oder nanoskopische Struktur auf, die Lotuseffekt-Eigenschaften aufweist.

Eine weitere vorteilhafte Ausführungsform der erfindungsgemäßen Vorrichtung weist mindestens ein Stützelement zum Stützen des Bandes in einem Umlenkungsbereich des Bandes auf. Das Stützelement erhöht die Stabilität der Beschichtungskammer und ist derart angeordnet, dass Schwingungen und/oder eine Durchbiegung des Bandes aufgrund des Gewichtes der Lebensmittel minimiert werden. Die Anordnung des Stützelements im Umlenkbereich des Bandes führt zu einer besonders stabilen und schwingungsarmen Laufeigenschaft des Bandes in demjenigen Bereich der Beschichtungskammer, in welchem das Produkt im Betrieb hauptsächlich angeordnet ist.

Die Erfindung löst die zugrundeliegende Aufgabe gemäß einem zweiten Aspekt der Erfindung bei einer Dragier-Vorrichtung der eingangs genannten Art, indem sie eine Zufuhreinrichtung zum Zuführen von Prozessgas in die Beschichtungskammer vorsieht. Die Zufuhr von Prozessgas in die Beschichtungskammer ermöglicht es, das Erstarren des Beschichtungsmaterials besonders beschleunigt durchzuführen. Die Zufuhreinrichtung sorgt für eine erzwungene, erhöhte Konvektion des Prozessgases durch die Gasdurchlässe und durch das zu beschichtende Produkt hindurch. Je nach Bedarf wird durch gezieltes, voreinstellbares Zuführen des Prozessgases die Feuchtigkeit bzw. Temperatur des Gases in der Beschichtungskammer verringert.

Das Prozessgas ist optional (aufbereitete) Luft oder ein anderes geeignetes Gas, beispielsweise Edelgas oder Stickstoff.

Eine vorteilhafte Ausführungsform der erfindungsgemäßen Vorrichtung weist eine Abzugseinrichtung zum Ausführen eines innerhalb der Beschichtungskammer vorherrschenden Gases auf, die mit der Zufuhreinrichtung zusammenwirkt, um eine Strömung innerhalb der Beschichtungskammer zu erzeugen. Mittels dieser Ausführungsform wird eine besonders hohe Kontrollierbarkeit des Erstarrungsprozesses und der Erstarrungsgeschwindigkeit sowie eine hohe Betriebsökonomie erreicht. Durch die Abzugseinrichtung ist das Gas innerhalb der Beschichtungskammer aktiv ausführbar bzw. abführbar. Der aktive Abzug des Gases innerhalb der Beschichtungskammer bewirkt eine stärkere Gasströmung, durch die Gasdurchlässe hindurch, mittels welcher das Beschichtungsmaterial besonders schnell erstarrbar ist. Ferner ermöglicht die Abzugseinrichtung, das Prozessgas einer Aufbereitungsanlage zuzuführen und wiederzuverwenden.

Bevorzugt ist die Abzugseinrichtung derart schwenkbar, dass die Zufuhreinrichtung der Beschichtungskammer das Prozessgas in einer ersten Richtung zuführt, und die Abzugseinrichtung das Gas in der Beschichtungskammer wahlweise in der ersten Richtung oder in einer zweiten Richtung aus der Beschichtungskammer ausführt. Mittels dieser Ausführungsform sind unterschiedliche Strömungskonfigurationen innerhalb der Beschichtungskammer variabel einstellbar. Hierzu ist die Abzugseinrichtung vorzugsweise derart schwenkbar, dass der Einlass der Abzugseinrichtung zum Auslass der Zufuhreinrichtung relativ angewinkelt ist.

Bevorzugt weist das Band eine Vielzahl von Gasdurchlässen auf, und die Abzugseinrichtung ist außerhalb der Beschichtungskammer benachbart zu den Gasdurchlässen angeordnet. Die Abzugseinrichtung befindet sich benachbart zu den Gasdurchlässen, die innerhalb der Beschichtungskammer angeordnet sind.

Vorzugsweise weist die Zufuhreinrichtung einen länglichen Auslass auf, dessen Länge in etwa der Breite der Beschichtungskammer entspricht. Auf diese Weise wird eine besonders gleichmäßige Zufuhr des Prozessgases im Wesentlichen über die gesamte Breite der Beschichtungskammer des Bandes erreicht.

Es folgt eine Beschreibung der Erfindung anhand eines Ausführungsbeispiels und Zeichnungen. Es zeigen:
- Figur 1: eine perspektivische Gesamtansicht auf ein Ausführungsbeispiel der erfindungsgemäßen Dragier-Vorrichtung in einem teilweise entmantelten Zustand,
- Figur 2: eine Seitenansicht des Ausführungsbeispiels
- Figur 3: eine perspektivische Ansicht mit Darstellung von Teilbereichen des Ausführungsbeispiels
- Figur 4: eine perspektivische Ansicht auf die Zufuhr- und Abzugseinrichtungen des Ausführungsbeispiels,
- Figur 5: eine Draufsicht auf einen Abschnitt des Bandes des Ausführungsbeispiels,
- Figur 6: eine perspektivische Ansicht auf einen Abschnitt des Bandes des Ausführungsbeispiels,
- Figur 7: eine Frontansicht auf eine Querstrebe des Bandes,
- Figur 8: eine vergrößerte Ansicht des mittleren Abschnitts der Querstreben aus Figur 7.
- Figur 9: eine vergrößerte Seitenansicht des Randbereichs des Bandes, und
- Figur 10: eine vergrößerte Seitenansicht des mittleren Abschnitts der Querstrebe aus Figur 9.

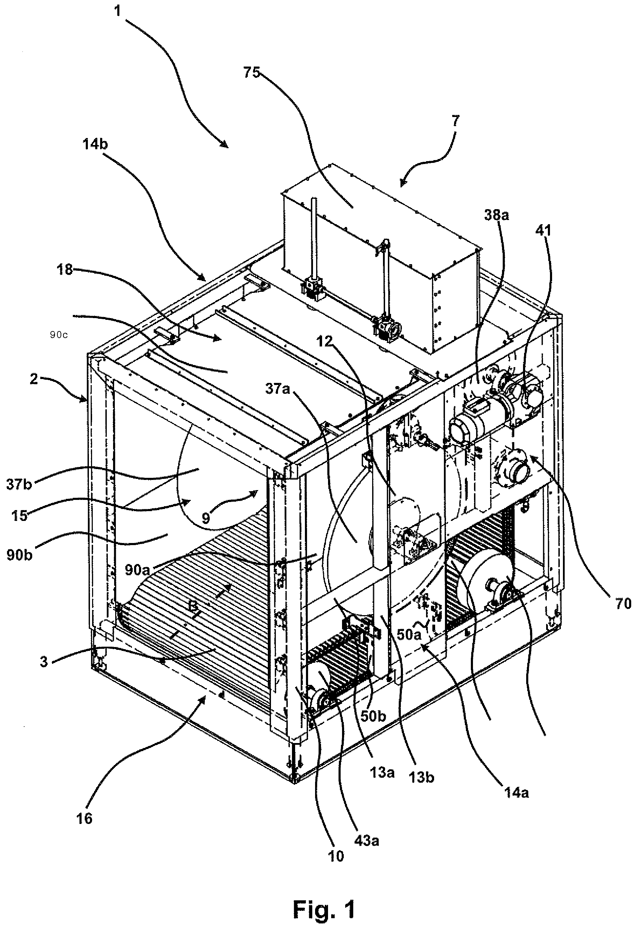

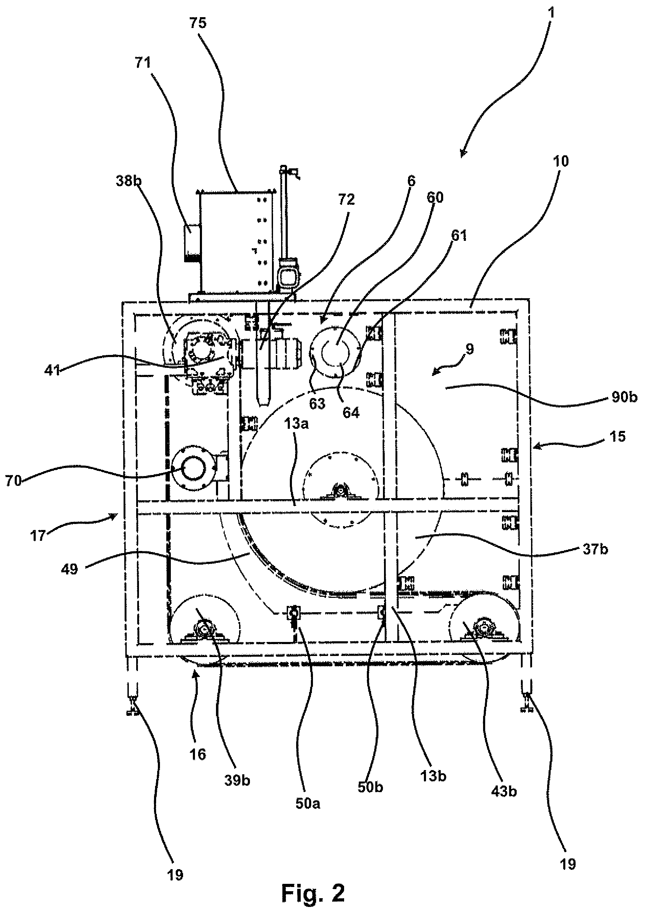

Figur 1 zeigt eine Dragier-Vorrichtung 1 zum Beschichten von Lebensmitteln mit einem Beschichtungsmaterial, insbesondere mit Zuckerlösung. Alternativ ist auch die Beschichtung mit Schokolade möglich. Die Vorrichtung weist ein Gehäuse 2 mit einer Beschichtungskammer 9 innerhalb des Gehäuses 2 auf. In der Beschichtungskammer 9 ist eine Abgabevorrichtung 5 (siehe Figur 2) zum Abgeben des Beschichtungsmaterials platziert bzw. angeordnet ist. Die Vorrichtung 1 weist ferner ein umlaufendes Band 3 auf, das abschnittsweise einen Teil der Bewandung der Beschichtungskammer 9 bildet und als Auflagefläche für die Lebensmittel vorgesehen ist Das Band 3 hat eine Vielzahl von Gasdurchlässen, die zum beschleunigten Erstarren des Beschichtungsmaterials ausgebildet sind. Ferner ist innerhalb der Beschichtungskammer 9 eine Zufuhreinrichtung 7 zum Zuführen von Prozessgas in der Beschichtungskammer 9 angeordnet. Die Zufuhreinrichtung 7 wirkt mit einer Abzugseinrichtung 70 zum Ausführen eines innerhalb der Beschichtungskammer 9 vorherrschenden Gases zusammen, um eine Strömung innerhalb der Beschichtungskammer 9 zu erzeugen.

Das Gehäuse 2 ist aus einem Gerüst 10 mit einer Vielzahl von quaderförmig zusammengestellten Stangenelementen aufgebaut. Das Gerüst 10 ist an der Außenseite mit Verkleidungselementen 12 verkleidet. In den Figuren 1 und 2 sind die Verkleidungselemente 12 nur ansatzweise eingezeichnet. Die Stangenelemente dienen einerseits zum Erhöhen der Steifigkeit des Gehäuses 2 und zum anderen dienen sie als Tragelemente für die innerhalb des Gehäuses 2 eingebauten Einrichtungen.

An zwei Lateralseiten 14a, 14b des Gehäuses 2 weist das Gerüst 10 zwischen den Stangenelementen jeweils horizontal und vertikal angeordnete Querstreben 13a, 13b auf. Eine horizontale Querstrebe 13a ist jeweils etwa auf mittlerer Höhe des Gehäuses 2 angeordnet und verläuft in horizontaler Richtung quer über die gesamte Lateralseite 14a, 14b des Gehäuses 2. Des Weiteren verläuft jeweils eine vertikale Querstrebe 13b in vertikaler Richtung quer die über gesamte Lateralseiten 14a, 14b des Gehäuses 2.

Das Gehäuse 2 weist ferner eine Vorderseite 15 auf, über welche die Beschichtungskammer 9 zugänglich ist. Die Vorderseite 15 weist eine freie offene Fläche auf, um einen ungehinderten Zugang zur Beschichtungskammer 9 zu ermöglichen (nicht in den Figuren dargestellt). Die Dragier-Vorrichtung 1 weist Türen zum Öffnen und Schließen der Beschichtungskammer 9 an Vorderseite 15 auf. Die Ausführung der Türen ist nicht auf eine bestimmte Art beschränkt, sondern kann je nach Einsatzsituation beispielsweise einteilig oder zweiteilig, vertikal oder horizontal schwenkend ausgebildet sein. Die Türen sind jeweils an den Stangenelementen des Gerüstes 10 schwenkend befestigbar.

Das Gehäuse 2 weist ferner eine Bodenseite 16 mit mehreren Fußelementen 19 zum Tragen des Gehäuses 2 auf. Die Fußelemente 19 befinden sich jeweils an den Ecken der Bodenseite 16. Sie sind höhenverstellbar ausgebildet, um einen ebenen Stand der Vorrichtung zu ermöglichen. Die Höhe der Fußelemente 19 ist vorzugsweise jeweils unabhängig voneinander einstellbar, um Bodenunebenheiten ausgleichen zu können. Im Inneren ist das Gehäuse 2 an einer Deckenseite 18 und an den Lateralseiten 14a, 14b bereichsweise mit mehreren Verkleidungselementen 90a, 90b, 90c verkleidet. Die Verkleidungselemente 90a, 90b, 90c bilden zusammen mit dem Band 3 und mit zwei Scheiben 37a, 37b die Bewandung der Beschichtungskammer 9. Die Breite der Beschichtungskammer 9 entspricht im Wesentlichen der Breite des Gehäuses 2. Zur Vorderseite 15 ist das Band 3 im Bereich der Bodenseite 16 angeordnet. Auf diese Weise wird der Innenraum des Gehäuses 2 in der Höhe mittels der Beschichtungskammer 9 und dem Band 3 vollständig ausgefüllt. Im Bereich der Rückseite 17 des Gehäuses 2, gegenüber der vorderen Seitenwand 15, verläuft das Band 3 abschnittsweise parallel zur Rückseite 17. Das Band 3 ist dicht benachbart zur Rückseite 17 angeordnet, um den Innenraum des Gehäuses 2 in Längsrichtung weitestgehend auszunutzen.

Die Verkleidungselemente 90a, 90b an den Lateralseiten 14a. 14b sind jeweils zweiteilig ausgebildet. Des Weiteren sind die Verkleidungselemente 90a, 90b im Wesentlichen passgenau zu den Scheiben 37a, 37b und dem Band 3 ausgeschnitten. Die Abstände zwischen den Verkleidungselementen 90a, 90b und dem Band 3 bzw. den Scheiben 37a, 37b sind so dimensioniert, um einen Kontakt zwischen den Teilen zu vermeiden. Ferner stellt der Abstand auch sicher, dass keine Lebensmittel durch die Spalten aus der Beschichtungskammer herausfallen.

Zur Deckenseite 18 ist die Beschichtungskammer 9 mittels mehrerer miteinander verschraubten Blechelementen 90c abgeschlossen. Die Verkleidungselemente 90c weisen eine Ausnehmung zum Anordnen eines Prozessgasauslasses 71 der Zufuhreinrichtung 7 in die Beschichtungskammer 9 auf.

Die Verkleidungselemente 90a, 90b, 90c sind derart gestaltet, dass ein Austritt von Gas aus der Beschichtungskammer 9 durch die Wände weitestgehend vermieden wird. Auf diese Weise wird ein Austritt von Gas durch die Gasdurchlässe des Bandes 3 forciert.

Das Band 3 dient als Auflagefläche und zum Durchmischen der Lebensmittel innerhalb der Beschichtungskammer 9. Das Band 3 ist so ausgebildet, dass es abschnittsweise in einer ersten Richtung in der Beschichtungskammer 9 verläuft, auf welchem die Lebensmittel gleichmäßig über das Band verteilt aufliegen. Ferner verläuft das Band abschnittsweise in eine zweite Richtung in der Beschichtungskammer 9, so dass die Lebensmittel in diesem Abschnitt am Band abrollen und sich entgegen der Laufrichtung B des Bandes 3 bewegen. Auf diese Weise werden die Lebensmittel auf dem Band 3 kontinuierlich durchgemischt. In diesem Ausführungsbeispiel ist die erste Richtung horizontal und die zweite Richtung vertikal ausgerichtet. Denkbar wären auch alternative Winkelstellungen der Abschnitte zueinander.

Das Band 3 wird in der Beschichtungskammer 9 in einem ersten Umlenkungsbereich mittels der Scheiben 37a, 37b aus der ersten Richtung in die zweite Richtung umgelenkt. Der Radius der Scheiben 37a, 37b ist derart bemessen, um ein Durchmischen der Lebensmittel sicherzustellen. Im Vergleich zu Antriebsrollen 38a, 38b und Umlenkrollen 39a, 39b, 43a, 43b, die zum Umlenken des Bandes 3 dienen, ist der Radius der Scheibe um ein Vielfaches größer als der Radius der besagten Rollen 38a, 38b, 39a, 39b, 43a, 43b. Die Scheiben 37a, 37b sind etwa mittig auf der horizontalen Querstrebe 13a drehbar gelagert, so dass die Umlenkung des Bandes 3 etwa in der Mitte der Längsrichtung des Gehäuses 2 ansetzt und nach einer Strecke in Längsrichtung entsprechend dem Radius der Scheibe 37 abgeschlossen ist.

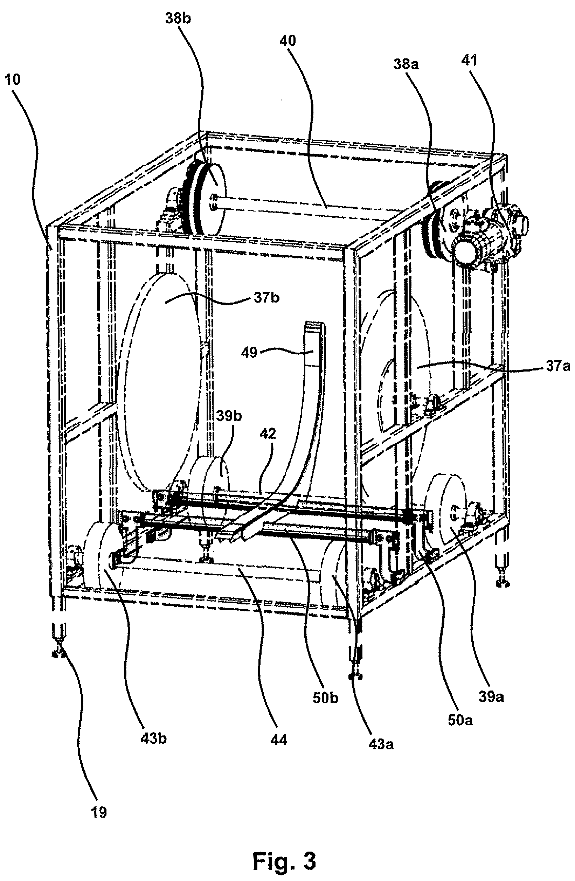

Wie in Figur 2 und 3 dargestellt, befindet sich ein Stützelement 49 zum Stützen des Bandes in dem ersten Umlenkungsbereich. Das Stützelement 49 ist kreisbogenförmig geformt, dessen Radius im Wesentlichen dem Radius der Scheiben 37a, 37b entspricht. Das Stützelement 39 ist in einem von dem Band 3 umschlossenen Innenraum, zwischen den außerhalb und innerhalb der Beschichtungskammer 9 laufenden Abschnitten, angeordnet. Das Stützelement 49 ist ferner etwa mittig zur Breite des Gehäuses 2 im ersten Umlenkungsbereich angeordnet. Zwei Tragstrukturen 50a, 50b sind zum Tragen des Stützelements 49 quer zwischen den Stangenelementen an den Lateralseiten 14a, 14b an der Bodenseite 16 des Gehäuses angebracht. In der Seitendarstellung aus Figur 2 ist zu erkennen, dass das Stützelement 49 im mittleren Bereich eine größere Dicke aufweist als an den Endbereichen. Die Dicke des Stützelements 49 richtet sich dabei nach der maximalen Traglast, die durch die Lebensmittel in auf dem Band 3 auf das Stützelement 49 wirkt.

Im Bereich der Deckenseite 18 wird das Band 3 mittels Antriebsrollen 38a, 38b angetrieben und umgelenkt. Die Antriebsrollen 38a, 38b weisen zum Antreiben des Bandes 3 eine Verzahnung auf. An den Antriebsrollen 38a, 38b wird das Band um ca. 180° umgelenkt und läuft aus der Beschichtungskammer 9 heraus. Von dort verläuft das Band außerhalb der Beschichtungskammer 9 entlang der zweiten Richtung zur Bodenseite 16 des Gehäuses. Alternative Ausgestaltungen sehen einen Umlenk- bzw. Umschlingungswinkel des Bandes 3 um die jeweilige Antriebsrolle 38a, 38b in einem Bereich von 160° bis 190° vor.

Die Antriebsrollen 38a, 38b sind als Zahnradscheiben ausgebildet und jeweils an den Lateralseiten 14a, 14b angeordnet. Die Antriebsrollen 38a, 38b sind über eine Welle 40 miteinander verbunden, wobei die Welle 40 mit einer Antriebseinrichtung 41 gekoppelt ist. Auf diese Weise wird sichergestellt, dass beide Rollen das Band 3 gleichförmig antreiben.

Die Antriebseinrichtung 41 befindet sich an der Außenwand der Lateralseite 14a.

Benachbart zum Eckbereich zwischen der Bodenseite 16 und der Rückseite 18 befinden sich erste Umlenkrollen 39a, 39b über die das Band 3 außerhalb der Beschichtungskammer 9 aus der zweiten in die erste Richtung umgelenkt wird. Die Umlenkrollen 39a, 39b sind relativ zum Gehäuse 2 so angeordnet, dass das Band 3 dicht benachbart zur Bodenseite 16 des Gehäuses 2 verläuft. Die ersten Umlenkrollen 39a, 39b sind ebenfalls mittels einer Welle 42 miteinander verbunden und stellen die gleichförmige Umlenkung des Bandes 3 sicher.

An der Vorderseite 15 im Bereich der Bodenseite 16 sind zweite Umlenkrollen 43a, 43b angeordnet. Mittels der zweiten Umlenkrollen 43a, 43b wird das Band 3 um ca. 180° in die Beschichtungskammer 9 umgelenkt (Alternative Ausgestaltungen wie vorstehend beschrieben). Die zweiten Umlenkrollen 43a, 43b sind in dem gezeigten Ausführungsbeispiel auf gleicher Höhe wie die ersten Umlenkrollen 39a, 39b angeordnet. Optional sind die ersten Umlenkrollen 39 und die zweiten Umlenkrollen auf einer unterschiedlichen Höhe angeordnet, um einen gewünschten Umlenk- bzw. Umschlingungswinkel zu erhalten. Eine Welle 44 verbindet die zweiten Umlenkrollen 43a, 43b miteinander, um eine gleichförmige Umlenkung des Bandes 3 sicherzustellen. Die ersten und zweiten Umlenkrollen 39a, 39b, 43a, 43b haben einen identischen Radius. Der Radius der Antriebsrollen 38a, 38b entspricht im Wesentlichen dem Radius der Umlenkrollen 39a, 39b, 43a, 43b. Das Band 3 weist zwei Riemen 33a, 33b auf, die jeweils entlang der Ränder des Bandes verlaufen und auf denen eine Vielzahl von zueinander beabstandeten Querstreben 34 befestigt sind. Die zur Beschichtungskammer 9 gerichteten Außenflächen der Querstreben 34 bilden dabei die Auflagefläche des Bandes 3.

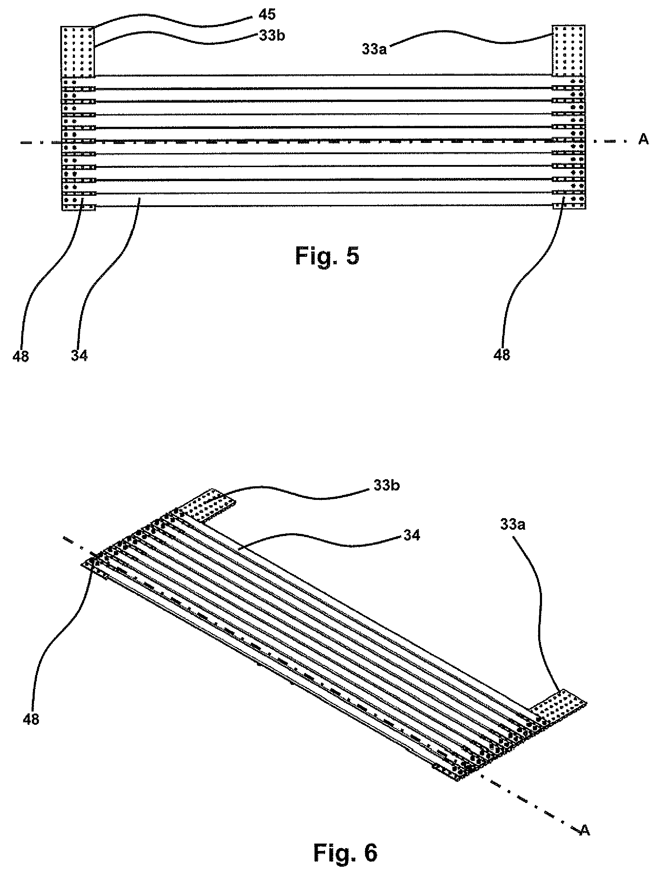

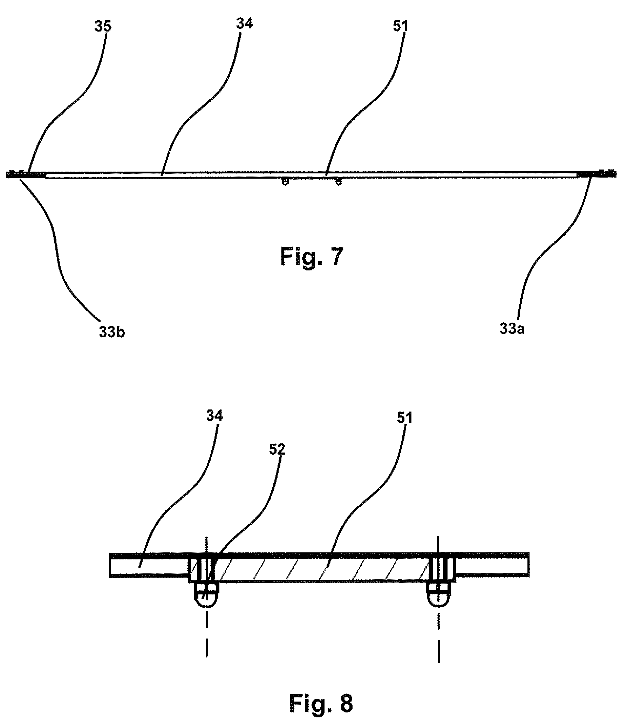

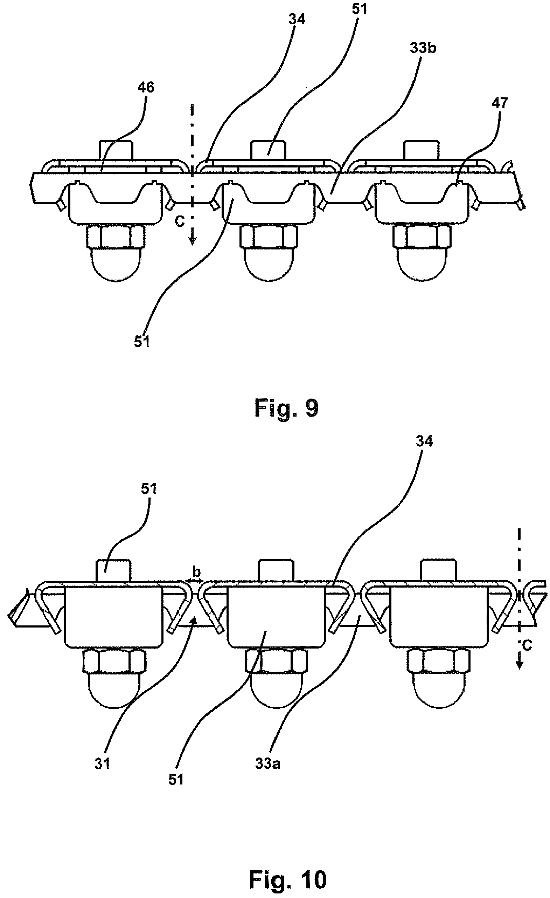

Die Riemen 33a, 33b sind jeweils einstückig und vorzugsweise aus einem elastischen Material ausgebildet. Vorteilhaft ist ein elastisches Material, das eine ausreichende Steifigkeit zum Aufnehmen der Traglasten der Lebensmittel aufweist sowie gute Dämpfungseigenschaften aufweist. Wie in Figur 9 dargestellt, sind auf einer ersten innenliegenden Seite des Riemens Einkerbungen 47 ausgebildet, die mit den Antriebsrollen 38a, 38b zum Antreiben des Bandes 3 zusammenwirken. Eine zweite außenliegende Seite des Riemens 33a, 33b weist eine Vielzahl von Befestigungsabschnitten 35 zur Befestigung der Querstreben 34 auf. Die Querstreben 34 sind zueinander beabstandet, um die Gasdurchlässe zu bilden. Die Befestigungsabschnitte 35 haben jeweils eine glatte Oberfläche, in denen in Reihe angeordnete Ausnehmungen 45 ausgebildet sind. Wie in Figur 6 und 7 dargestellt, sind die Befestigungsabschnitte 35 auf der Außenseite des Riemens 33a, 33b in schmalen Streifen parallel zueinander angeordnet und mit jeweils vier Ausnehmungen 45 versehen.

In diesem Ausführungsbeispiel ist die Querstrebe 34 mittels eines Verbindungselements ausgebildet. Denkbar wäre es auch die Querstreben 34 aus Stangenelementen oder auch aus einem nichtmetallischen Material auszubilden. Des Weiteren sind die Querstreben 34 vorteilhafterweise mit einem haftungsarmen Material, z. B. Teflon, beschichtet. Die Verkleidungselemente 34 sind relativ zu einem korrespondierenden Befestigungsabschnitt 35 am Riemen derart starr befestigt, dass keine Relativbewegung zwischen dem jeweiligen Verbindungselement 34 und dem Befestigungsabschnitt 35 stattfindet. Vorteilhafterweise weist das Verbindungselement 34 an den Enden jeweils stegförmige Abschnitte 48a, 48b auf. Die stegförmigen Abschnitte 48a, 48b weisen eine geringere Breite auf als der sich zwischen den Riemen 33a, 33b befindende Auflagebereich des Verbindungselements 34. Die stegförmigen Abschnitte 48a, 48b liegen jeweils auf den Riemen 33a, 33b auf und sind mit diesen verbunden. Zwischen den Riemen 33a, 33b und den stegförmigen Abschnitten 48a, 48b ist jeweils eine Einlegemutter 46 angeordnet. Jeweils zwei Schrauben 51 sind zum Befestigen des Verbindungselements 34 in Eingriff mit der Einlegemutter 47 und dem Riemen. Die Befestigung wird auf diese Weise besonders starr und verschleißarm ausgebildet.

Der breitere Auflagebereich der Verkleidungselemente 34 weist zwei Randbereiche in Richtung der Längsachse A auf, die von der Auflagefläche wegweisend gebogen sind, wie in Figur 10 dargestellt. Die Biegung ist so ausgewählt, um eine möglichst strömungsgünstige Form der Gasdurchlässe zu erreichen und zugleich die Biegesteifigkeit der Verkleidungselemente 34 zu erhöhen. Die Stirnseiten der gebogenen Randbereiche der Verkleidungselemente 34 grenzen dabei jeweils an einer Seitenfläche des Riemens 33a, 33b an und erhöhen die Steifigkeit des Bandes 3 in Querrichtung. Ferner ist die Länge der Verkleidungselemente 34 so bemessen, dass die Gasdurchlässe sich über die gesamte Breite der Beschichtungskammer 9 erstrecken. Auf diese Weise liegen die Riemen 33a, 33b außerhalb der Beschichtungskammer 9.

Wie in den Figuren 7 und 8 dargestellt, ist jedes Verbindungselement 34 jeweils mit einer Stützscheibe 51 versehen, die mit dem Stützelement 49 zum Stützen des Bandes 3 in dem ersten Umlenkbereich zusammenwirkt. Die Stützscheibe 51 hat eine größere Dicke als das Verbindungselement 34 im Auflagebereich. In Figur 10 ist das Verhältnis der Dicken dargestellt. Auf diese Weise wird eine Berührung zwischen dem Stützelement 49 und den Verkleidungselemente 34 wirksam verhindert. Die Stützscheibe 51 wird jeweils mittels Bolzen 52 an den Verkleidungselementen 34 befestigt. Die Materialien der Stützscheibe 51 und des Stützelements 49 sind dazu ausgebildet, um ein möglichst reibungsarmes Gleiten der Stützscheibe 51 über das Stützelement 49 zu ermöglichen. Ferner ist ein Material bevorzugt, das Schwingungen des Bandes in dem ersten Umlenkungsbereich abdämpft.

Die Gasdurchlässe des Bandes 3 sind in diesem Ausführungsbeispiel jeweils geradlinig ausgebildet und erstrecken sich in Längsrichtung entlang ihrer Längsachsen A. Die Gasdurchlässe erstrecken sich ferner in Richtung der Längsachsen A jeweils über die gesamte Breite der Beschichtungskammer 9. In Querrichtung werden sie durch die Riemen 33a, 33b begrenzt. Die Längsachsen A der Gasdurchlässe sind quer zur Laufrichtung B des Bandes 3 ausgerichtet.

Die Gasdurchlässe haben jeweils einen Öffnungsquerschnitt 31, der sich relativ zur Strömungsrichtung C des durch die Gasdurchlässe strömenden Gases verjüngend und aufweitend ausgebildet ist. Die Strömungsrichtung C des Gases verläuft in etwa senkrecht zur Auflagefläche des Bandes aus der Beschichtungskammer 9 heraus, wie in Figur 10 eingezeichnet. Die gebogenen Abschnitte der Verkleidungselemente 34 bilden mit einem gebogenen Abschnitt eines benachbarten Verbindungselements 34 einen Öffnungsquerschnitt 31, der sich zunächst verjüngend und anschließend aufweitend ausgebildet. Die gebogenen Randbereiche des Verbindungselements 34 bilden zudem abgerundete Kanten im Bereich des Öffnungsquerschnitts 31.

Nicht in den Figuren dargestellt sind eine Vielzahl von Mitnehmern zum Aufgreifen der Lebensmittel, die auf dem Band 3 angebracht sind. Die Mitnehmer sind aus Blechen oder Vorsprüngen hakenförmig, stiftförmig, U-förmig oder L-förmig ausgebildet und dienen zum fördern der Lebensmittel auf dem Band 3, insbesondere gegen die Schwerkraft. Denkbar wären je nach Lebensmittelart auch alternative Formen der Mitnehmer. Die Mitnehmer werden entweder ab Werk an das Band 3 angebracht oder sind mit Befestigungsmitteln zum variablen Anbringen und Abnehmen versehen. Letzere Alternative hat insbesondere den Vorteil, dass die Anzahl und Position der Mitnehmer auf dem Band 3 je nach Situation frei einstellbar ist.

Innerhalb der Beschichtungskammer 9 ist im Bereich der Deckenseite 18 eine Abgabevorrichtung 6 zum Abgeben des Beschichtungsmaterials auf die Lebensmittel angeordnet, wie in Figur 2 schematisch eingezeichnet. Die Abgabevorrichtung 6 hat eine Abgabedüseneinrichtung 60 und ein die Abgabedüseneinrichtung 60 umschließendes Schutzrohr 61. Das Schutzrohr 61 weist einen Auslass auf, der fluchtend zu der Abgabendüseneinrichtung 60 zum Abgeben des Beschichtungsmaterials ausrichtbar bzw. drehbar ist. Die Abgabendüseneinrichtung 60 weist mehrere Abgabedüsen auf, die auf einem zylindrischen Zuführrohr 64 entlang der Breite der Beschichtungskammer 9 in einer Reihe nebeneinander angeordnet sind und ist über diesen mit einem Beschichtungsmaterialvorrat strömungsverbunden. Das Schutzrohr 61 ist als zylindrisches Rohr ausgebildet, dessen Durchmesser größer ist als das des Zuführrohrs 64. Beide besagten Rohre 61, 64 sind koaxial zueinander ausgerichtet.

Der Auslass am Schutzrohr 61 ist kreisförmig ausgebildet, kann gemäß einer optionalen, bevorzugten Ausführungsform aber auch schlitzförmig ausgebildet sein (nicht in den Figuren abgebildet). Der Auslass könnte alternativ auch aus mehreren zu den Abgabedüsen korrespondierenden kreisförmigen Ausnehmungen ausgebildet sein. Der Auslass hat auf einer Innenseite des Schutzrohrs 61 einen Vorsprung, der als eine Flüssigkeitsbarriere fungiert. Dieser verhindert, dass kondensierte Flüssigkeit innerhalb des Schutzrohrs 61 an der Innenwand des Schutzrohrs 61 aufgrund der Schwerkraft abfließt und durch den Auslass nach außen tritt.

Ferner weist die Abgabevorrichtung 6 eine am Schutzrohr 61 angebrachte Reinigungsdüseneinrichtung 63 zum Reinigen der Abgabedüseneinrichtung 60 auf, wobei die Abgabedüseneinrichtung 60 zum Reinigen in eine Reinigungsposition drehbar ist. In der Reinigungsposition befindet sich die Abgabedüseneinrichtung 60 vorzugsweise in einer horizontal ausgerichteten Position.

Die Reinigungsdüseneinrichtung 63 enthält mehrere Reinigungsdüsen, die zu den Abgabedüsen 60 korrespondierend in einer Reihe nebeneinander angeordnet sind. Die Reinigungsdüsen sind auf dem Schutzrohr 61 so relativ zu dem Auslass 62 angeordnet, dass der Auslass sich in der Reinigungsposition oberhalb der Reinigungsdüsen befindet und kein Reinigungsmittel aufgrund der Schwerkraft durch den Auslass abfließen kann. Vorzugsweise wird heißes Druckwasser als Reinigungsmittel verwendet. Das Schutzrohr 61 ist in seiner länglichen Erstreckungsrichtung zu einer horizontalen Achse angewinkelt oder zu einem Ende hin geneigt, so dass die Reinigungsmittel zum geneigten Ende hin abfließen. Zum Entsorgen der Reinigungsmittel ist das Schutzrohr 61 mit einem Auffangbehälter strömungsverbunden.

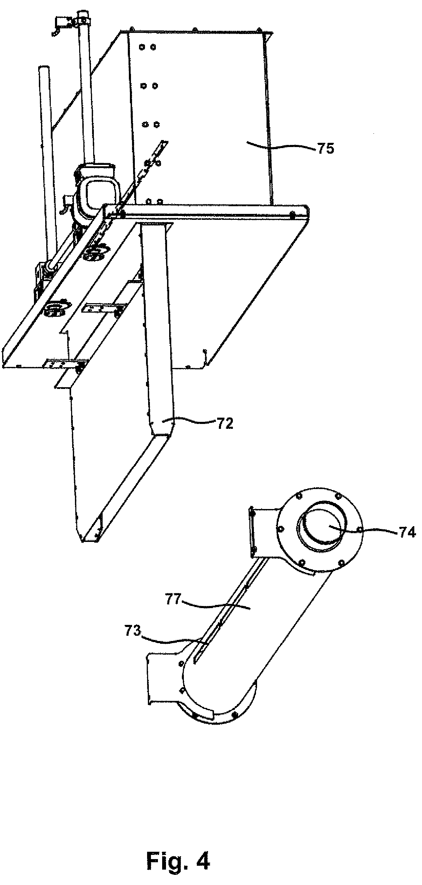

Die Zufuhreinrichtung 7 ist zum Zuführen von Prozessgas in die Beschichtungskammer 9 im Bereich der Deckenseite benachbart zwischen der Abgabevorrichtung 6 und den Antriebsrollen 38a, 38b angeordnet. Wie in Figur 4 dargestellt, hat die Zufuhreinrichtung 7 eine Prozessgaspumpe, die innerhalb eines Gehäuses 75 der Zufuhreinrichtung 7 angeordnet ist. Das Gehäuse 75 ist an der Außenwand der Deckenseite 18 des Gehäuses 2 angebracht. Innerhalb des Gehäuses 75 befinden sich ferner Aufbereitungseinrichtungen zum Konditionieren des Prozessgases auf gewünschte Eigenschaften, insbesondere hinsichtlich der Feuchtigkeit und Temperatur. Ferner ist vorzugsweise eine Filteranlage vorgesehen (nicht dargestellt), mittels welcher Schmutzpartikel aus dem Prozessgas entfernbar sind.

Das Gehäuse 75 weist einen horizontal ausgerichteten zylindrischen Einlass 71 zum Einziehen von Frischluft auf. Der Einlass 71 ist alternativ auch mit einer Prozessgasquelle anschließbar, die nicht in den Figuren abgebildet ist. Von dem Gehäuse 75 steht ein länglicher Auslass 72 ab, dessen Länge in etwa der Breite der Beschichtungskammer 9 entspricht. Der Auslass 72 weist eine Höhe auf, um von der Deckenseite 18 ausgehend ausreichend tief in die Beschichtungskammer 9 hineinzuragen. Wie in Figur 4 dargestellt, ragt der Auslass 72 von dem Gehäuse vertikal in die Beschichtungskammer 9 hinein und führt das Prozessgas den Lebensmitteln zu. Vorzugsweise ist der Auslass so angeordnet, dass das Prozessgas auf den ersten Umlenkbereich gelenkt wird.

Die Abzugseinrichtung 70 ist zum Erzeugen einer Strömung außerhalb der Beschichtungskammer 9 benachbart zu den Gasdurchlässen angeordnet. Es befindet sich kurz oberhalb des ersten Umlenkungsbereichs im Innenraum des Bandes 3. Die Abzugseinrichtung 70 weist in dem gezeigten Ausführungsbeispiel drei schlitzförmige Einlässe 73 auf, die auf einem zylindrischen Abzugskanal 77 in einer Reihe nebeneinander angeordnet sind. Alternativ ist ein bzw. sind zwei oder eine Vielzahl von Einlässen vorgesehen. Die Länge der Einlässe 73 ist derart bemessen, dass die Einlässe 73 zusammengenommen sich in etwa über die gesamte Länge des Abzugskanals 77 erstrecken. Die Einlässe 73 sind benachbart zu dem innerhalb der Beschichtungskammer 9 laufenden Abschnitt des Bandes 3 oberhalb des ersten Umlenkbereichs angeordnet. Ferner sind die Einlässe 73 so ausgerichtet, dass das Gas aus der Beschichtungskammer 9 im Wesentlichen in einer horizontal ausgerichteten Strömungsrichtung in die Abzugseinrichtung 70 einströmt.

An einer axialen Seite der Abzugseinrichtung 70, befindet sich ein Auslass 74 zum Ausführen des Gases aus der Abzugseinrichtung 70 bzw. aus dem Abzugskanal 77. Der Auslass 74 ist mittels einer kreisförmigen Ausnehmung auf der axialen Seite und einem axial abstehenden Vorsprung ausgebildet und befindet sich außerhalb des Gehäuses 2 der Dragier-Vorrichtung 1.

Mittels der Verwendung der Zufuhreinrichtung 7 und der Abzugseinrichtung 70 ist eine Strömung innerhalb der Beschichtungskammer realisierbar. Die Anordnung ermöglicht insbesondere eine verstärkte Strömung des Gases innerhalb der Beschichtungskammer 9 im Bereich des ersten Umlenkbereichs, Die Abzugseinrichtung 70 ist schwenkbar gelagert. Die Strömung des Gases ist somit jederzeit durch Verschwenken der Abzugseinrichtung 70 variierbar. Auf diese Weise führt die Zufuhreinrichtung 7 der Beschichtungskammer 9 das Prozessgas in einer ersten Richtung zu, und die Abzugseinrichtung 70 führt das Gas in der Beschichtungskammer durch die Gasdurchlässe in einer zweiten Richtung aus der Beschichtungskammer aus, wobei die zweite Richtung variierbar ist.

Die Zufuhr- und Abzugseinrichtung 7, 70 sind ferner derart steuerbar, dass das Volumen des zugeführten Prozessgases und das ausgeführten Gases in Abhängigkeit von einem, mehreren oder sämtlichen der Parameter Geschwindigkeit des Bandes, Menge der Lebensmittel. Art des Beschichtungsmaterial, Temperatur des Beschichtungsmaterials, und Größe der Lebensmittel festgelegt wird.

## Patentansprüche

1. Dragier-Vorrichtung (1) zum Beschichten von Lebensmitteln mit einem Beschichtungsmaterial, insbesondere mit Zuckerlösung oder mit einer Lösung auf Basis von Zuckerersatzstoff, mit
einem Gehäuse (2),
einer Beschichtungskammer (9) innerhalb des Gehäuses (2), worin eine Abgabevorrichtung (6) zum Abgeben des Beschichtungsmaterials platzierbar ist, und
einem umlaufenden Band (3), das abschnittsweise einen Teil der Bewandung der Beschichtungskammer (9) bildet und als Auflagefläche für die Lebensmittel vorgesehen ist, wobei das Band (3) eine Vielzahl von Gasdurchlässen aufweist, die zum beschleunigten Erstarren des Beschichtungsmaterials ausgebildet sind,
**dadurch gekennzeichnet, dass** die Gasdurchlässe in Richtung einer Längsachse (A) sich jeweils über die gesamte Breite der Beschichtungskammer (9) erstrecken.

2. Dragier-Vorrichtung (1) nach Anspruch 1,
**dadurch gekennzeichnet, dass** die Gasdurchlässe jeweils geradlinig ausgebildet sind

3. Dragier-Vorrichtung (1) nach einem der vorstehenden Ansprüche,
**dadurch gekennzeichnet, dass** die Gasdurchlässe jeweils eine Breite im Bereich von 0,8 mm bis 3 mm aufweisen.

4. Dragier-Vorrichtung (1) nach einem der vorstehenden Ansprüche,
**dadurch gekennzeichnet, dass** jeweils eine Längsachse (A) der Gasdurchlässe quer zur Laufrichtung des Bandes (3) ausgerichtet ist.

5. Dragier-Vorrichtung (1) nach einem der vorstehenden Ansprüche,
**dadurch gekennzeichnet, dass** die Abstände zwischen zwei benachbarten Gasdurchlässen in Laufrichtung des Bandes (3) konstant sind und vorzugsweise in einem Bereich von 10 mm bis 50 mm liegen.

6. Dragier-Vorrichtung (1) nach einem der vorstehenden Ansprüche,
**dadurch gekennzeichnet, dass** die Kanten des Öffnungsquerschnitts (31) abgerundet sind.

7. Dragier-Vorrichtung (1) nach einem der vorstehenden Ansprüche,
**dadurch gekennzeichnet, dass** das Band (3) zwei Riemen (33a, 33b) aufweist, die jeweils entlang der Ränder des Bandes (3) verlaufen und auf denen eine Vielzahl von zueinander beabstandeten Querstreben (34) befestigt ist.

8. Dragier-Vorrichtung (1) nach Anspruch 7,
**dadurch gekennzeichnet, dass** die Riemen (33a 33b) jeweils einstückig ausgebildet sind.

9. Dragier-Vorrichtung (1) nach Anspruch 7 oder 8,
**dadurch gekennzeichnet, dass** die Querstreben (34) jeweils relativ zu einem korrespondierenden Befestigungsabschnitt (35) an dem Riemen (33a, 33b) starr befestigt sind.

10. Dragier-Vorrichtung (1) nach einem der Ansprüche 7 bis 9,
**dadurch gekennzeichnet, dass** jede Querstrebe (34) ein Blechelement aufweist.

11. Dragier-Vorrichtung (1) nach einem der vorstehenden Ansprüche, **gekennzeichnet durch** eine Abgabevorrichtung (6) zum Abgeben des Beschichtungsmaterials auf die Lebensmitteln mit einer Abgabedüseneinrichtung (60) und ein die Abgabedüseneinrichtung (60) umschließendes Schutzrohr (61), wobei das Schutzrohr (61) einen oder mehrere Auslässe aufweist, die fluchtend zu der Abgabendüseneinrichtung (60) zum Abgeben des Beschichtungsmaterials ausrichtbar sind.

12. Dragier-Vorrichtung (1) nach Anspruch 10 oder 11,
**dadurch gekennzeichnet, dass** die Abgabevorrichtung (6) eine am Schutzrohr (61) angebrachte Reinigungsdüseneinrichtung (63) zum Reinigen der Abgabedüseneinrichtung (60) aufweist, wobei die Abgabedüseneinrichtung (60) zum Reinigen in eine Reinigungsposition drehbar ist.

13. Dragier-Vorrichtung (1) nach Anspruch 11,
**dadurch gekennzeichnet, dass** der Auslass auf einer Innenseite des Schutzrohrs (61) einen als Flüssigkeitsbarriere ausgebildeten Vorsprung aufweist.

14. Dragier-Vorrichtung (1) nach einem der Ansprüche 11 bis 13,
**dadurch gekennzeichnet, dass** das Schutzrohr (61) in seiner länglichen Erstreckungsrichtung zumindest bereichsweise zu einer horizontalen Achse angewinkelt ist.

15. Dragier-Vorrichtung (1) nach einem der vorstehenden Ansprüche,
**dadurch gekennzeichnet, dass** das Band (3) eine Vielzahl von Mitnehmern zum Aufgreifen der Lebensmittel aufweist.

16. Dragier-Vorrichtung (1) nach einem der Ansprüche 7 bis 14,
**dadurch gekennzeichnet, dass** die Querstreben (34) mit einem haftungsmindernden, insbesondere lipophoben und/oder hydrophoben, Material beschichtet sind.

17. Dragier-Vorrichtung (1) nach einem der vorstehenden Ansprüche, **gekennzeichnet durch** mindestens ein Stützelement (49) zum Stützen des Bandes in (3) einem Umlenkungsbereich des Bandes (3).

18. Dragier-Vorrichtung (1) zum Beschichten von Lebensmitteln mit einem Beschichtungsmaterial, insbesondere mit Zuckerlösung, nach einem der vorstehenden Ansprüche,
**gekennzeichnet durch** eine Zufuhreinrichtung (7) zum Zuführen von Prozessgas in die Beschichtungskammer (9).

19. Dragier-Vorrichtung (1) nach Anspruch 18,
**gekennzeichnet durch** eine Abzugseinrichtung (70) zum Ausführen eines innerhalb der Beschichtungskammer (9) vorherrschenden Gases, die mit der Zufuhreinrichtung (7) zusammenwirkt, um eine Strömung innerhalb der Beschichtungskammer (9) zu erzeugen.

20. Dragier-Vorrichtung (1) nach Anspruch 19,
**dadurch gekennzeichnet, dass** die Abzugseinrichtung (70) derart schwenkbar ist, dass die Zufuhreinrichtung (7) der Beschichtungskammer (9) das Prozessgas in einer ersten Richtung zuführt, und die Abzugseinrichtung (70) das Gas in der Beschichtungskammer (9) wahlweise in der ersten Richtung oder in einer zweiten Richtung aus der Beschichtungskammer (9) ausführt.

21. Dragier-Vorrichtung (1) nach Anspruch 18 oder 20,
**dadurch gekennzeichnet, dass** das Band (3) eine Vielzahl von Gasdurchlässen aufweist und dass die Abzugseinrichtung (70) außerhalb der Beschichtungskammer (9) benachbart zu den Gasdurchlässen angeordnet ist.

22. Dragier-Vorrichtung (1) nach einem der Ansprüche 18 bis 21,
**dadurch gekennzeichnet, dass** die Zufuhreinrichtung (7) einen länglichen Auslass aufweist, dessen Länge in etwa der Breite der Beschichtungskammer (9) entspricht.

## Claims

1. A covering device (1) for coating foodstuffs with a coating material, in particular with sugar solution or with a sugar-substitute-based solution, having
a housing (2),
a coating chamber (9) within the housing (2), in which a delivery device (6) for delivering the coating material can be placed, and
an circulating conveyer (3) which portion-wise forms a part of the wall of the coating chamber (9) and is provided as a support surface for the foodstuffs, wherein the conveyer (3) has a plurality of gas apertures for accelerated solidification of the coating material,
**characterized in that** in the direction of a longitudinal axis (A), the gas apertures in each case extend over the entire width of the coating chamber (9).

2. A covering device (1) according to claim 1,
**characterized in that** the gas apertures are each straight.

3. A covering device (1) according to any one of the preceding claims,
**characterized in that** the gas apertures each have a width in the range from 0.8 mm to 3 mm.

4. A covering device (1) according to any one of the preceding claims,
**characterized in that** in each case a longitudinal axis (A) of the gas apertures is oriented transverse to the running direction of the conveyer (3).

5. A covering device (1) according to any one of the preceding claims,
**characterized in that** the distances between two adjacent gas apertures are constant in the running direction of the conveyer (3) and preferably lie in a range from 10 mm to 50 mm.

6. A covering device (1) according to any one of the preceding claims,
**characterized in that** the edges of the opening cross-section (31) are rounded.

7. A covering device (1) according to any one of the preceding claims, **characterized in that** the conveyer (3) has two belts (33a, 33b) which each run along the edges of the conveyer (3) and on which there are secured a plurality of spaced-apart transverse support bars (34).

8. A covering device (1) according to claim 7,
**characterized in that** the belts (33a, 33b) are each in one piece.

9. A covering device (1) according to claim 7 or 8, **characterized in that** the transverse support bars (34) are each rigidly secured to the belt (33a, 33b) relative to a corresponding securing portion (35).

10. A covering device (1) according to any one of claims 7 to 9,
**characterized in that** each transverse support bar (34) has a sheet-metal element.

11. A covering device (1) according to any one of the preceding claims,
**characterized by** a delivery device (6) for delivering the coating material onto the foodstuffs with a delivery nozzle arrangement (60) and a protective pipe (61) surrounding the delivery nozzle arrangement (60), wherein the protective pipe (61) has one or more outlets alignable with the delivery nozzle arrangement (60) for delivering the coating material.

12. A covering device (1) according to claim 10 or 11,
**characterized in that** the delivery device (6) has a cleaning nozzle arrangement (63), attached to the protective pipe (61), for cleaning of the delivery nozzle arrangement (60), wherein the delivery nozzle arrangement (60) is rotatable into a cleaning position for cleaning.

13. A covering device (1) according to claim 11,
**characterized in that** on an inner side of the protective pipe (61), the outlet has a projection in the form of a fluid barrier.

14. A covering device (1) according to any one of claims 11 to 13,
**characterized in that** in the longitudinal extension direction of the protective pipe (61), at least regions of the protective pipe (61) are bent with respect to a horizontal axis.

15. A covering device (1) according to any one of the preceding claims,
**characterized in that** the conveyer (3) has a plurality of entrainers for seizing the foodstuffs.

16. A covering device (1) according to any one of claims 7 to 14, **characterized in that** the transverse support bars (34) are coated with an adhesion-reducing, in particular lipophobic and/or hydrophobic, material.

17. A covering device (1) according to any one of the preceding claims,
**characterized by** at least one support element (49) to support the conveyer (3) in a deflection region of the conveyer (3).

18. A covering device (1) for coating foodstuffs with a coating material, in particular with sugar solution, according to any one of the preceding claims,
**characterized by** a feed device (7) for feeding process gas into the coating chamber (9).

19. A covering device (1) according to claim 18,
**characterized by** an escape arrangement (70) for leading out a gas prevailing within the coating chamber (9), which escape arrangement (70) cooperates with the feed device (7) in order to produce a flow within the coating chamber (9).

20. A covering device (1) according to claim 19,
**characterized in that** the escape arrangement (70) is pivotable in such a manner that the feed device (7) feeds the process gas to the coating chamber (9) in a first direction and the escape arrangement (70) leads the gas in the coating chamber (9) out of the latter optionally in the first direction or in a second direction.

21. A covering device (1) according to claim 18 or 20,
**characterized in that** the conveyer (3) has a plurality of gas apertures and **in that** the escape arrangement (70) is arranged exterior to the coating chamber (9), adjacent to the gas apertures.

22. A covering device (1) according to any one of claims 18 to 21,
**characterized in that** the feed device (7) has a longitudinal outlet whose length substantially corresponds to the width of the coating chamber (9).

## Revendications

1. Dispositif de dragéification (1) servant à enrober des aliments avec un enrobage, notamment avec une solution de sucre ou avec une solution à base de succédané de sucre, comprenant
un logement (2),
une chambre d'enrobage (9) à l'intérieur du logement (2), à l'intérieur de laquelle un dispositif distributeur (6) peut être placé de manière à distribuer l'enrobage, et
une bande transporteuse (3) qui forme, dans certaines zones, une partie de la paroi de la chambre d'enrobage (9), et qui est prévue en tant que surface d'appui pour les aliments, la bande (3) comportant une pluralité d'ouvertures de passage de gaz conçues pour accélérer la prise de l'enrobage,
**caractérisé en ce que** les ouvertures de passage de gaz en direction d'un axe longitudinal (A) s'étendent respectivement sur toute la largeur de la chambre d'enrobage (9).

2. Dispositif de dragéification (1) selon la revendication 1,
**caractérisé en ce que** les ouvertures de passage de gaz sont formées respectivement de manière rectiligne.

3. Dispositif de dragéification (1) selon l'une quelconque des revendications précédentes,
**caractérisé en ce que** les ouvertures de passage de gaz présentent respectivement une largeur dans la plage de 0,8 mm à 3 mm.

4. Dispositif de dragéification (1) selon l'une quelconque des revendications précédentes,
**caractérisé en ce que** respectivement un axe longitudinal (A) des ouvertures de passage de gaz est orienté transversalement au sens de marche de la bande (3).

5. Dispositif de dragéification (1) selon l'une quelconque des revendications précédentes,
**caractérisé en ce que** les écarts entre deux ouvertures de passage de gaz voisines dans le sens de marche de la bande (3) sont constants et se situent de préférence dans une plage de 10 mm à 50 mm.

6. Dispositif de dragéification (1) selon l'une quelconque des revendications précédentes,
**caractérisé en ce que** les arêtes de la section d'ouverture (31) sont arrondies.

7. Dispositif de dragéification (1) selon l'une quelconque des revendications précédentes,
**caractérisé en ce que** la bande (3) comprend deux courroies (33a, 33b), qui s'étendent respectivement le long des bords de la bande (3) et sur lesquelles une pluralité de traverses (34) espacées les unes des autres sont fixées.

8. Dispositif de dragéification (1) selon la revendication 7,
**caractérisé en ce que** les courroies (33a, 33b) sont réalisées respectivement d'une seule pièce.

9. Dispositif de dragéification (1) selon la revendication 7 ou 8,
**caractérisé en ce que** les traverses (34) sont fixées rigidement sur la courroie (33a, 33b) respectivement par rapport à une section de fixation (35) correspondante.

10. Dispositif de dragéification (1) selon l'une quelconque des revendications 7 à 9,
**caractérisé en ce que** chaque traverse (34) comprend un élément en tôle.

11. Dispositif de dragéification (1) selon l'une quelconque des revendications précédentes,
**caractérisé par** un dispositif distributeur (6) destiné à distribuer l'enrobage sur l'aliment, comprenant un dispositif à buses de distribution (60) et un tube protecteur (61) entourant le dispositif à buses de distribution (60), le tube protecteur (61) comprenant un ou plusieurs orifices de sortie qui peuvent être alignés avec le dispositif à buses de distribution (60) de manière à distribuer l'enrobage.

12. Dispositif de dragéification (1) selon la revendication 10 ou 11,
**caractérisé en ce que** le dispositif distributeur (6) comprend un dispositif à buses de nettoyage (63) qui est monté sur le tube protecteur (61) et qui permet de nettoyer le dispositif à buses de distribution (60), le dispositif à buses de distribution (60) pouvant être tourné dans une position de nettoyage en vue d'un nettoyage.

13. Dispositif de dragéification (1) selon la revendication 11,
**caractérisé en ce que** l'orifice de sortie présente, sur une face intérieure du tube protecteur (61), une partie saillante réalisée sous la forme d'une barrière à liquide.

14. Dispositif de dragéification (1) selon l'une quelconque des revendications 11 à 13,
**caractérisé en ce que** le tube protecteur (61), dans sa direction d'extension longitudinale, forme un angle au moins par endroits avec un axe horizontal.

15. Dispositif de dragéification (1) selon l'une quelconque des revendications précédentes,
**caractérisé en ce que** la bande (3) comprend une pluralité d'entraîneurs permettant de saisir les aliments.

16. Dispositif de dragéification (1) selon l'une quelconque des revendications 7 à 14,
**caractérisé en ce que** les traverses (34) sont revêtues d'un matériau diminuant l'adhérence, en particulier lipophobe et/ou hydrophobe.

17. Dispositif de dragéification (1) selon l'une quelconque des revendications précédentes,
**caractérisé par** au moins un élément de support (49) permettant de soutenir la bande (3) dans une zone de déviation de la bande (3).

18. Dispositif de dragéification (1) servant à enrober des aliments avec un enrobage, notamment avec une solution de sucre, selon l'une quelconque des revendications précédentes,
**caractérisé par** un dispositif d'amenée (7) permettant d'amener un gaz de traitement dans la chambre d'enrobage (9).

19. Dispositif de dragéification (1) selon la revendication 18,
**caractérisé par** un dispositif d'évacuation (70) qui permet d'extraire un gaz régnant à l'intérieur de la chambre d'enrobage (9) et qui coopère avec le dispositif d'amenée (7), afin de produire un écoulement à l'intérieur de la chambre d'enrobage (9).

20. Dispositif de dragéification (1) selon la revendication 19,
**caractérisé en ce que** le dispositif d'évacuation (70) peut être amené à pivoter de telle manière que le dispositif d'amenée (7) de la chambre d'enrobage (9) amène le gaz de traitement dans une première direction, et le dispositif d'évacuation (70) extrait le gaz présent dans la chambre d'enrobage (9) de la chambre d'enrobage (9) sélectivement dans la première direction ou dans une deuxième direction.

21. Dispositif de dragéification (1) selon la revendication 18 ou 20,
**caractérisé en ce que** la bande (3) comprend une pluralité d'ouvertures de passage de gaz et **en ce que** le dispositif d'évacuation (70) est disposé à l'extérieur de la chambre d'enrobage (9) au voisinage des ouvertures de passage de gaz.

22. Dispositif de dragéification (1) selon l'une quelconque des revendications 18 à 21,
**caractérisé en ce que** le dispositif d'amenée (7) comprend un orifice de sortie longitudinal dont la longueur correspond sensiblement à la largeur de la chambre d'enrobage (9).
